# EUROPÄISCHE PATENTSCHRIFT

(11) **EP 2 295 145 B1**
(45) Veröffentlichungstag und Bekanntmachung des Hinweises auf die Patenterteilung: **26.06.2019**
(21) Anmeldenummer: 10176065.0
(22) Anmeldetag: 09.09.2010
(51) Int. Cl.: B02C 13/06, B02C 13/28, A01B 33/02, B02C 13/30, B02C 21/02

(54) **Vorrichtung zum Brechen von Steinen und dergleichen**
Apparatus for crushing stones and the like
Dispositif de broyage de pierres ou analogues

(30) Priorität: 11.09.2009 DE 102009043990
(43) Veröffentlichungstag der Anmeldung: 16.03.2011
(73) Patentinhaber: Schneider, Willi, 87452 Altusried (DE)
(72) Erfinder: Schneider, Willi, 87452 Altusried (DE)
(74) Vertreter: Hutzelmann, Gerhard

(56) Entgegenhaltungen:
- EP-A2- 0 046 452
- AT-U1- 9 429
- DE-A1- 2 346 414
- DE-B- 1 207 773

## Beschreibung

Die Erfindung bezieht sich auf eine Vorrichtung zum Brechen von Steinen und anderen brechbaren Materialien wie Teer, Bauschutt. Diese Vorrichtungen sind als mobile oder stationäre Einrichtungen ausgebildet, wobei die mobile Vorrichtung an einem Fahrzeug anordenbar ist und beide Vorrichtungen ein drehbar gelagertes Brechwerkzeug aufweisen.

Die Brechwerkzeuge wurden bisher meist an Wellen oder dergleichen angeordnet, wobei im Betrieb sich das zu brechende Gut immer wieder verklemmt hat. Zudem besteht das große Problem, daß die bekannten Brechwerkzeuge und Wellen sehr leicht verschleissen und auch durch zu brechendes Material leicht beschädigt und deformiert werden. Die Brechwerkzeuge selbst fallen auch öfters regelrecht von den Wellen ab. Zudem lassen sich verbrauchte Brechwerkzeuge nur schwer austauschen.

Aus der AT 009 429 U1 ist beispielsweise eine Brechvorrichtung der genannten Art bekannt, die jedoch hinsichtlich Verschleiß und Befestigung der Werkzeuge nicht befriedigend ist.

Aus der DE 2346414 A1 ist ein Steinbrecher bekannt, der mit fliegenden Brechwerkzuegen arbeitet, was bei horizontal verlaufender Welle des Brechwerkzeuges Probleme bereitet.

Aus der DE 1207773 B ist ein Rotor für Prallmühlen bekannt.

Aus der EP 0046452 A2 ist eine weitere gattungsgemäße Zerkleinerungsvorrichtung bekannt.

Der Erfindung liegt die Aufgabe zugrunde, die Vorrichtung mit einer kreiszylinderförmigen Brechwalze so auszugestalten, dass Betriebsstörungen durch die vorgenannten Probleme vermieden werden und Brechwerkzeuge auf einfache Art und Weise auswechselbar zu machen.

Diese Aufgabe wird erfindungsgemäß dadurch gelöst, daß auf der Innenseite des Brechwalzen-Mantels eine Verstärkung vorgesehen ist, an welcher das Brechwerkzeug wenigstens mittelbar befestigt ist und dass das Brechwerkzeug mittels einer schwalbenschwanzförmigen Führung an der Brechwalze festlegbar ist und dass an der Brechwalze ein Befestigungsteil lösbar befestigt ist, das über eine vorzugsweise schräge Fläche das Brechwerkzeug an der Brechwalze festlegt und dass eine zusätzliche Gewindebohrung vorgesehen ist, mit der das Befestigungsteil mit Hilfe einer Schraube abdrückbar ist.

Damit kann die Brechwalze verhältnismäßig leicht ausgebildet sein und trotzdem erhalten die Brechwerkzeuge einen guten Halt. Zudem ist die Befestigung der Brechwerkzeuge sehr effektiv gelöst. Auch andere kraft- und/oder formschlüssige Verbindungen sind denkbar. Durch die kreiszylinderförmige Ausgestaltung wird ein Verklemmen von Steinen und der gleichen an den Brechwerkzeugen nahezu ausgeschlossen. Zudem ist die Brechwalze sehr stabil. Zu brechendes Material wird an der Außenseite abgeleitet und kann aufgrund fehlender Angriffspunkte weder verklemmen noch die Brechwalze beschädigen. Auch die Brechwerkzeuge sitzen sicher an der Brechwalze. Auch stark verspannte Befestigungsteile und Brechwerkzeuge lassen sich auf einfache Art und Weise auswechseln.

Als besonders vorteilhaft hat es sich erwiesen, wenn gemäß einer weiteren Ausgestaltung der Erfindung die Brechwerkzeuge abnehmbar an der Brechwalze befestigt sind.

Bei einem Verschleiß einzelner oder auch aller Brechwerkzeuge können diese damit leicht ausgewechselt werden.

Erfindungsgemäß ist es auch äußerst vorteilhaft, wenn die Brechwerkzeuge kraftschlüssig an der Brechwalze befestigt sind.

Damit wird eine gute Krafteinleitung gewährleistet. Dabei können die Werkzeuge breiter als bislang üblich ausgeführt werden, wodurch die Krafteinleitung verbessert ist und auch die Gefahr eines Herausfallens aus der Brechwalze durch unerwünschte Bewegungen und eine nicht kraftschlüssige Verbindung vermieden werden.

Eine weitere vorteilhafte Ausgestaltung der Erfindung ist dadurch gekennzeichnet, dass die Brechwalze Ausnehmungen aufweist, in welche die Brechwerkzeuge wenigstens teilweise einzugreifen vermögen.

Damit ist trotz der leichten Auswechselbarkeit ein sehr guter Halt der Brechwerkzeuge gewährleistet.

Gemäß einer sehr vorteilhaften Ausgestaltung der Erfindung ist das Befestigungsteil mittels wenigstens einer Schraube gegen die Verstärkung ziehbar.

Damit wird ein sehr zuverlässiges Festlegen des jeweiligen Brechwerkzeuges erreicht und gleichzeitig ein einfaches Lösen des Brechwerkzeuges ermöglicht.

Eine weitere sehr vorteilhafte Ausgestaltung der Erfindung liegt darin, dass die Brechwalze an beiden Enden mit einem Antrieb versehen ist.

Damit wird eine Torsionsbelastung der Brechwalze weitgehend vermieden und eine gleichmäßige Einleitung der notwendigen Brechkraft in die Brechwalze erreicht.

Als sehr vorteilhaft hat es sich dabei ergeben, wenn gemäß einer weiteren Ausgestaltung der Erfindung die beiden Antriebe der Brechwalze zu einem gemeinsamen Antrieb zusammengefasst sind.

Damit wird ein Einleiten der Brechkraft von einem externen Antrieb sehr erleichtert.

Als besonders vorteilhaft hat es sich dabei ergeben, wenn erfindungsgemäß der gemeinsame Antrieb mit einem Zapfwellen-Anschluss versehen ist.

Damit können für den Antrieb beispielsweise handelsübliche Traktoren verwendet werden, die gleichzeitig auch den Vortrieb der Brech-Vorrichtung übernehmen. Insbesondere bei stationären Anlagen sind auch Elektro-Motoren oder andere Antriebseinrichtungen denkbar.

In der Zeichnung ist die Erfindung anhand eines Ausführungsbeispiels veranschaulicht. Dabei zeigen:
- Fig.1: eine Brech-Vorrichtung für Steine, die an einen Traktor angehängt ist,
- Fig.2: eine Brechwalze, wie sie in der Vorrichtung nach Fig.1 angeordnet ist, und die mit mehreren Brechwerkzeugen bestückt ist,
- Fig.3: eine Brechwalze mit Ausnehmungen zum Einsetzen der Brechwerkzeuge und
- Fig.4: eine Schnittdarstellung der Befestigung eines Brechwerkzeuges an der Brechwalze jedoch ohne die erfindungsgemäße Schwalbenschwanzführung.

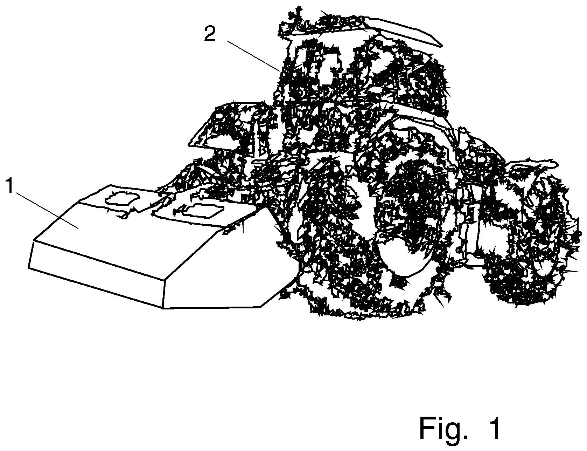

Mit 1 ist in Fig.1 eine Brech-Vorrichtung bezeichnet, die zum Brechen von Steinen und dergleichen vorgesehen und an einem Traktor 2 befestigt ist. Damit kann die Brech-Vorrichtung über eine zu behandelnde Fläche gezogen werden, wobei der Taktor über eine nicht sichtbare Zapfwelle gleichzeitig den Antrieb für die Brech-Vorrichtung zur Verfügung stellt.

In der Brech-Vorrichtung 1 ist eine Brechwalze 3 angeordnet, die über zwei Zapfen 4 und 5 drehbar gelagert und antreibbar ist.

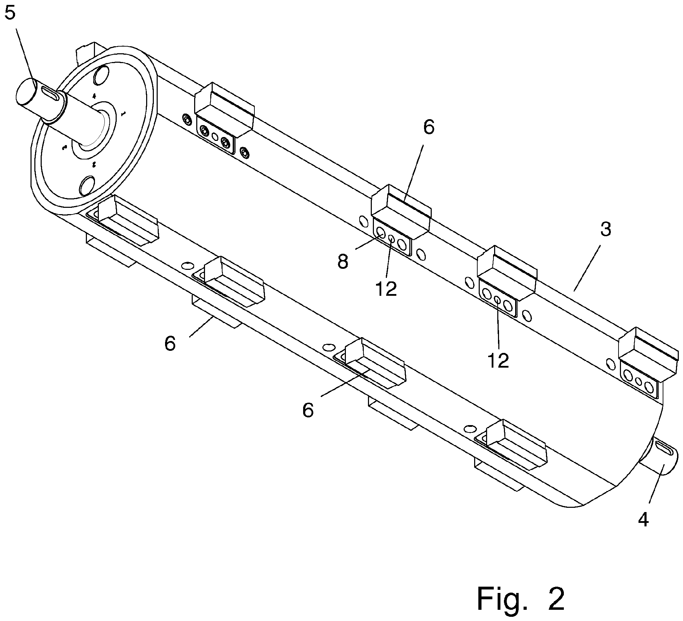

An ihrer Oberfläche ist die Brechwalze 3 mit Brechwerkzeugen 6 versehen, wie dies in Fig.2 dargestellt ist.

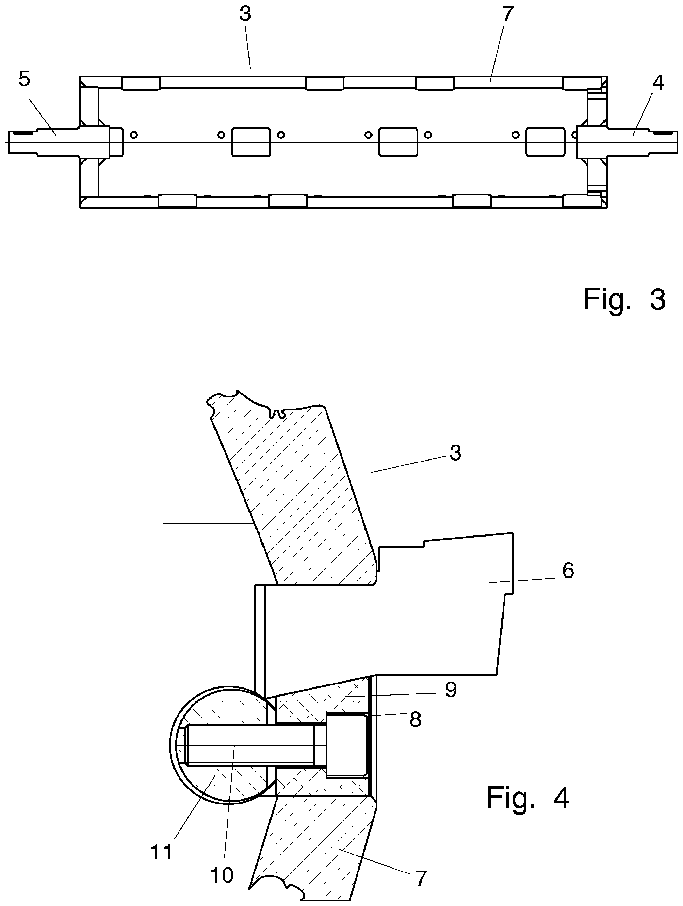

Beim Ausführungsbeispiel nach Fig.3 ist die Brechwalze 3 an ihrem Mantel 7 mit Ausnehmungen 8 versehen, die zur Aufnahme der Brechwerkzeuge dienen.

In Fig.4 ist ein Abschnitt des Mantels 7 der Brechwalze 3 dargestellt, wobei in eine Ausnehmung 8 ein Brechwerkzeug 6 eingesetzt ist. Das eingesetzte Ende des Brechwerkzeuges 6 ist einseitig schräg ausgebildet, und ist erfindungsgemäß schwalbenschwanzform ig sich nach innen erweiternd geformt.

Mit der einen Flanke stützt sich des Brechwerkzeug am Mantel 7 der Brechwalze ab, während an der gegenüberliegenden Flanke ein Befestigungsteil 9 mit einer schrägen Flanke angreift, das sich seinerseits am Mantel 7 abstützt. Mittels Schrauben 10 wird dieses Befestigungsteil 9 gegen ein Verstärkungsteil 11 gezogen, das sich seinerseits an der Innenseite des Mantels 7 abstützt. Beim Anziehen der Schrauben 10 gleiten die schrägen Flanken des Brechwerkzeuges 6 und des Befestigungsteils 9 aneinander und das Brechwerkzeug wird festgespannt.

Das Verstärkungsteil ist seinerseits über Schrauben am Mantel 7 festgelegt. Andere Befestigungen wie Annieten oder Anschweißen sind aber denkbar.

Zum Wechseln eines Brechwerkzeuges muss lediglich die Schrauben-Verbindung 10 gelöst werden und das Brechwerkzeug kann einfach aus der Ausnehmung 8 herausgezogen werden. Bei stark verspannten Brechwerkzeugen 6 kann das Befestigungsteil 9 mittels einer Schraube 10, die in eine zusätzliche Gewindebohrung 12 eingeschraubt wird, gelöst und abgedrückt werden, wodurch auch die eingespannten Brechwerkzeuge 6 gelöst werden.

Gegenüber bekannten Brechwerkzeugen können die Brechwerkzeuge 6 auch breiter ausgebildet werden, wodurch ein Kippen, Losschlagen oder dergleichen vermieden wird. Hierzu werden oftmals Befestigungsteile 9 eingesetzt, die wenigstens zwei Schrauben 10 aufzunehmen vermögen

Durch diese Maßnahmen wird die Standzeit der Brechwerkzeuge 6 erhöht.

Mit den Brechwerkzeugen 6 zusammenwirkende Gegenwerkzeuge sind in bekannter Weise innerhalb der Brechvorrichtung angeordnet.

An den beiden Zapfen 4, 5 greifen nicht dargestellte Antriebe an, die innerhalb oder außerhalb der Brechvorrichtung zusammengefasst sind und in einem gemeinsamen Zapfwellenanschluß münden. Es sind auch andere Antriebe wie zum Beispiel Elektromotore denkbar. Es ist auch denkbar, daß die Brechwalzen 3 nur auf einer Seite angetrieben werden. Ebenso ist bei einem zweiseitigen Antrieb eine elektronische oder anderweitige Synchronisation denkbar. Mehrere Brechwalzen 3 können einzeln oder gemeinsam angetrieben werden.

Die Brechwalze 3 kann hohl oder massiv ausgebildet sein.

Es ist auch denkbar, daß eine nicht dargestellte Schwungmasse vorgesehen ist, um Belastungsspitzen auf den Antrieb abzuschwächen.

## Patentansprüche

1. Vorrichtung - zum Brechen von Steinen und dergleichen in einer mobilen Einrichtung, wobei die Vorrichtung(1) an einem Fahrzeug(2) gelagert ist - die eine drehbare Brechwalze(3) mit daran befestigten Brechwerkzeugen(6) aufweist und wobei die Brechwalze(3) kreiszylinderförmig ausgebildet ist, **dadurch gekennzeichnet, dass** auf der Innenseite des Brechwalzen-Mantels(7) eine Verstärkung(11) vorgesehen ist, an welcher das Brechwerkzeug(6) wenigstens mittelbar befestigt ist und dass das Brechwerkzeug(6) mittels einer schwalbenschwanzförmigen Führung an der Brechwalze(3) festlegbar ist und dass an der Brechwalze(3) ein Befestigungsteil(9) lösbar befestigt ist, das über eine vorzugsweise schräge Fläche das Brechwerkzeug(6) an der Brechwalze(3) festlegt und dass eine zusätzliche Gewindebohrung (12) vorgesehen ist, mit der das Befestigungsteil (9) mit Hilfe einer Schraube (10) abdrückbar ist.

2. Vorrichtung nach Anspruch 1, **dadurch gekennzeichnet, dass** die Brechwerkzeuge(6) abnehmbar an der Brechwalze(3) befestigt sind.

3. Vorrichtung nach einem der vorangehenden Ansprüche, **dadurch gekennzeichnet, daß** die Brechwerkzeuge (6) kraftschlüssig an der Brechwalze (3) befestigt sind.

4. Vorrichtung nach einem der vorhergehenden Ansprüche, **dadurch gekennzeichnet, dass** die Brechwalze(3) Ausnehmungen(8) aufweist, in welche die Brechwerkzeuge(6) wenigstens teilweise einzugreifen vermögen.

5. Vorrichtung nach einem der vorangehenden Ansprüche, **dadurch gekennzeichnet, dass** das Befestigungsteil(9) mittels wenigstens einer Schraube(10) gegen die Verstärkung(11) ziehbar ist.

6. Vorrichtung nach einem der vorangehenden Ansprüche, **dadurch gekennzeichnet, dass** die Brechwalze an beiden Enden mit einem Antrieb versehen ist.

7. Vorrichtung nach Anspruch 6, **dadurch gekennzeichnet, dass** die beiden Antriebe der Brechwalze zu einem gemeinsamen Antrieb zusammengefasst sind.

8. Vorrichtung nach Anspruch 7, **dadurch gekennzeichnet, dass** der gemeinsame Antrieb mit einem Zapfwellen-Anschluss versehen ist.

## Claims

1. Device for crushing stones and the like in mobile equipment, wherein the device (1) is mounted on a vehicle (2) and comprises a rotatable crushing roller (3) with crushing tools (6) secured thereto and wherein the crushing roller (3) is of circularly cylindrical construction, **characterised in that** a reinforcement (11) to which the crushing tool (6) is secured at least indirectly is provided on the inner side of the crushing roller casing (7), that the crushing tool (6) is fixable to the crushing roller (3) by means of a swallowtail-shaped guide, a securing member (9) fixed to the crushing roller (3) by way of a preferably inclined surface of the crushing tool (6) is detachably secured to the crushing roller (3) and that an additional threaded bore (12) by which the securing part (9) can be pressed down with the help of a screw (10) is provided.

2. Device according to claim 1, **characterised in that** the crushing tools (6) are detachably secured to the crushing roller (3).

3. Device according to one of the preceding claims, **characterised in that** the crushing tools (6) are secured to the crushing roller (3) by force couple.

4. Device according to any one of the preceding claims, **characterised in that** the crushing roller (3) has recesses (8) in which the crushing tools (6) are capable of engaging at least partly.

5. Device according to any one of the preceding claims, **characterised in that** the securing member (9) can be drawn against the reinforcement (11) by means of at least one screw (10).

6. Device according to any one of the preceding claims, **characterised in that** the crushing roller is provided with a drive at both ends.

7. Device according to claim 6, **characterised in that** the two drives of the crushing roller are combined to form a common drive.

8. Device according to claim 7, **characterised in that** the common drive is provided with a power take-off shaft connection.

## Revendications

1. Dispositif - dévolu à la fracturation de pierres et de substances analogues dans un appareil mobile, ledit dispositif (1) étant monté sur un véhicule (2) - équipé d'un cylindre rotatif de fracturation (3) auquel des outils de fracturation (6) sont fixés, ledit cylindre de fracturation (3) étant de réalisation cylindrique droite, **caractérisé par le fait qu'**un renfort (11), auquel l'outil de fracturation (6) est fixé de manière au moins indirecte, est prévu sur la face intérieure de l'enveloppe (7) du cylindre de fracturation ; **par le fait que** ledit outil de fracturation (6) peut être consigné à demeure sur ledit cylindre de fracturation (3) au moyen d'un guide configuré en queue d'aronde ; **par le fait qu'**une pièce de fixation (9), arrêtant ledit outil de fracturation (6) sur ledit cylindre de fracturation (3) par l'intermédiaire d'une surface préférentiellement inclinée, est fixée amoviblement audit cylindre de fracturation (3) ; et **par le fait qu'**il est prévu un perçage taraudé additionnel (12) par le biais duquel ladite pièce de fixation (9) peut être dissociée par pression, à l'aide d'une vis (10).

2. Dispositif selon la revendication 1, **caractérisé par le fait que** les outils de fracturation (6) sont fixés au cylindre de fracturation (3) avec faculté de dépose.

3. Dispositif selon l'une des revendications précédentes, **caractérisé par le fait que** les outils de fracturation (6) sont fixés au cylindre de fracturation (3) par engagement positif.

4. Dispositif selon l'une des revendications précédentes, **caractérisé par le fait que** le cylindre de fracturation (3) comporte des évidements (8) dans lesquels les outils de fracturation (6) sont en mesure de pénétrer, au moins en partie.

5. Dispositif selon l'une des revendications précédentes, **caractérisé par le fait que** la pièce de fixation (9) peut être bloquée contre le renfort (11) à l'aide d'au moins une vis (10).

6. Dispositif selon l'une des revendications précédentes, **caractérisé par le fait que** le cylindre de fracturation est pourvu d'un entraînement aux deux extrémités.

7. Dispositif selon la revendication 6, **caractérisé par le fait que** les deux entraînements du cylindre de fracturation sont regroupés en un entraînement commun.

8. Dispositif selon la revendication 7, **caractérisé par le fait que** l'entraînement commun est doté d'un raccord de prise de force.
